Europäisches Patentamt

European Patent Office

Office européen des brevets

(19)

(11) Publication number: 0 276 496 B1

## EUROPEAN PATENT SPECIFICATION

(12)

(45) Date of publication of patent specification: 18.03.92    (51) Int. Cl.5: **A01F 15/10, A01D 90/02**

(21) Application number: 87200114.4

(22) Date of filing: 26.01.87

(54) Baler feeder mechanism.

(43) Date of publication of application:
03.08.88 Bulletin 88/31

(45) Publication of the grant of the patent:
18.03.92 Bulletin 92/12

(84) Designated Contracting States:
DE FR GB

(56) References cited:
EP-A- 0 074 533
EP-A- 0 120 780
DE-A- 1 507 371
DE-A- 1 782 821
US-A- 3 022 622

(73) Proprietor: FORD NEW HOLLAND N.V.
Leon Claeysstraat 3a
B-8210 Zedelgem(BE)

(72) Inventor: Naaktgeboren, Adrianus
Vogelwikkestraat 7
B-8211 Zedelgem (Veldegem)(BE)
Inventor: Van Eecke, Roger Henri
Forthoekstraat 8
B-8370 Blankenberge(BE)
Inventor: Todd, Robert R.
25 Meadowview Drive
Leola Pennsylvania(US)
Inventor: Webb, Bryant F.
Road 2
Ephrata, PA 17522(US)

(74) Representative: Vandenbroucke, Alberic T.J.
FORD NEW HOLLAND N.V. Leon Claeysstraat
3A
B-8210 Zedelgem(BE)

EP 0 276 496 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

This invention relates generally to agricultural balers and more specifically to balers of the traditional rectangular type, i.e. balers which produce bales of crop material which are rectangular in shape. In particular, the invention is concerned with the feeder mechanism of such balers.

In EP-A-0.148.537 there is disclosed a baler of basically conventional design in that it comprises a bale case or chamber in which a bale of crop material is formed, and which has an inlet opening communicating with a feeder duct or chamber in which charges of crop material are accumulated. After a charge of crop material is accumulated in the feeder duct, it is transferred or stuffed in the bale case for compression by a reciprocable plunger operating therein. In this particular baler, the packing of crop material into the feeder duct to form a charge is effected by packer tines extending along a tine bar rotatable within the feeder duct, and the stuffing of an accumulated charge into the bale case is accomplished by stuffer tines mounted on the tine bar and offset from the packer tines; the outer ends of the respective sets of tines following different paths which are preferably generally apple shaped.

This feeding and stuffing arrangement has been found generally satisfactory except that, with certain crops and crop conditions, the bale case is not always filled evenly across its entire cross section by each charge of crop material from the feeder duct so that bales of uneven density are formed. This is unacceptable to the extent that the uneven density adversely affects the bale shape. Bales of irregular shape and density further also are not well suited for further handling and stacking.

The reason for this incomplete or irregular filling of the bale case cross section with charges of crop material in certain crops and crop conditions can be explained as follows :

Considering first the operation of the baler in "normal" crops and crop conditions, it is noted that, as the packer tines of the feeder mechanism pack crop material in the feeder duct to accumulate a charge, this crop material is somewhat compressed during each packing stroke while being advanced in the feeder duct. As soon as the packer tines release the crop material in the feeder duct, said material tends to recover from the compression, i.e. to expand, whereby it engages opposite walls of the feeder duct and thereby remains in the advanced position therein, i.e. it does not tend to fall back towards the inlet of the feeder duct. When finally a full charge is accumulated in the feeder duct, it fills substantially the full length thereof and when subsequently this charge of crop material is stuffed into the bale case it also fills the entire cross section thereof generally evenly as is desired.

Crop material which does not have these springy characteristics behaves itself in a totally different manner during the packing and stuffing cycles of the feeder mechanism. Silage and other crops with a high moisture content do not have this natural resilience. When such crops are being handled, the crop material, which to some extent is compressed by the packer tines as it is fed thereby into the feeder duct, tends not to recover from this compression, whereby it does not maintain its position in the feeder duct when the packer tines retract. Consequently, there is a tendency for a given charge to fall back under gravity once presented to the feeder duct by the packer tines. The greater the time lag between successive tines entering the feeder duct, the further a charge is likely to fall. This problem is aggravated in larger balers which are becoming increasingly popular. This problem also is more critical in so-called "bottom-fed" or "in- line" balers than in the older "side-fed" or "offset" balers for reasons as will be readily appreciated.

When operating in "low volume" crops, the baler according to EP-A-0.148.537 equally may suffer from similar problems as explained hereabove and whereby bales of irregular shape may be formed.

GB-A-2.059.869 and EP-A-0.120.780 disclose balers which generally are of the same type as the baler disclosed in EP-A-0.148.537 to which has been referred hereabove. These balers equally have a feeder duct which communicates with a bale case inlet opening from which it curves downwardly and forwardly to terminate in a forwardly facing open crop receiving mouth. The feeder means according to GB-A-2.059.869 equally comprise packer means and stuffer tines while that the feeder means according to EP-A-0.120.780 are operable to successively perform the packing and stuffing functions.

According to GB-A-2.059.869 the outermost curved wall (as seen with respect to the radius of curvature of the feeder duct) is resiliently mounted adjacent its lower end to permit outward pivotal movement thereof around a point adjacent the bale case inlet opening when the density of a pre-compressed charge of crop material in the feeder duct exceeds a pre-set value and further crop material still has to be added to this charge before it can be stuffed into the bale case. This arrangement thus enables the accumulation of "larger-than-normal" charges of crop material into the feeder duct without these charges being excessively pre-compressed.

However, this arrangement still fails to provide any solution for the above described problems encountered when handling silage or other crop material with a high moisture content. Indeed, the variation in the cross sectional dimension of the feeder duct in the direction of the radius of curvature is relatively minimal especially in the section thereof adjacent to the bale chamber intake opening and thus, the aforedescribed disturbing behaviour of silage or other similar crops in the feeder duct has not been cured with the arrangement according to GB-A-2.059.869. This is so even though, when this feeder duct is positioned in its narrowest position, it tapers from the intake mouth to an intermediate point along its length and gradually increases in width from this intermediate point toward the bale case inlet. However, when the feeder duct is positioned in its extended position, the configuration thereof is pretty much the same as in the baler according to EP-A-0.148.537 i.e. the feeder duct has a cross sectional dimension in the direction of the radius of curvature which is generally constant along its length from the feeder duct mouth to the bale case inlet opening.

According to EP-A-0.120.780, the feeder duct is delimited by a fixed outer curved wall and an inner curved wall of which a major portion, at the lower end thereof, equally is fixed and an upper portion is mounted for pivotal movement at a distance from the bale case inlet. Resilient means urge the pivotal portion towards an inwardly inclined position with respect to the outer wall thus defining together with this outer wall, and as seen in the direction towards the bale case inlet, a tapering upper portion of the feeder duct. These resilient means further also permit the pivotable inner wall portion to move away from the outer wall toward a generally parallel position with respect to this outer wall under influence of crop material being packed in the feeder duct.

In as much as the movable inner wall portion forms only a relatively small part of the inner wall and the fixed inner wall portion tapers with respect to the outer wall as seen in the direction from the feeder duct mouth to the bale case inlet, the feeder duct according to EP-A-0.120.780, in effect, has a generally tapering configuration as seen in said direction even when the inner movable wall portion is in its extended position. While this configuration has certain advantages in certain operating conditions, it nevertheless still is unable to provide a solution for the problems described above and associated with the handling of silage and similarly wet crops.

Moreover, as the movable inner wall portion is pivotable in the way as described, the dimension of the outlet of the feeder duct is variable while that the bale case inlet is fixed and thus, it will be appreciated that the transfer of charges of crop material from the feeder duct into the bale case will be hampered in as much as, with the movable inner wall portion in the extended position, the transition from the feeder duct to the bale case indeed forms a bottle neck.

Starting from EP-A-0.120.780, it is an object of the present invention to present a solution for the problems encountered in the feeder duct when baling silage or similarly wet crops with a baler according to this state-of-the-art and this solution is obtained by the combination defined in the appended claims in general and the appended main claim in particular.

An agricultural baler in accordance with the present invention will now be described in greater detail, by way of example, with reference to the accompanying drawings in which :

Figure 1 is a side view of the baler,

Figure 2 is partial sectional view of a detail of Figure 1 on a larger scale,

Figure 3 is a view similar to that of Figure 2 but showing certain components in different operative positions,

Figure 4 is a partial sectional view along the lines IV-IV of Figure 2, and

Figures 5 and 6 are similar to Figures 2 and 3, respectively, but showing an alternative embodiment.

In the following description, right and left hand references are determined by standing at the rear of the machine and facing in a direction of forward travel. Also, in the following decription, it is to be understood that such terms as "forward", "rearward", "left", "right", "upwardly", etc. are words of convenience and are not to be construed as limiting terms.

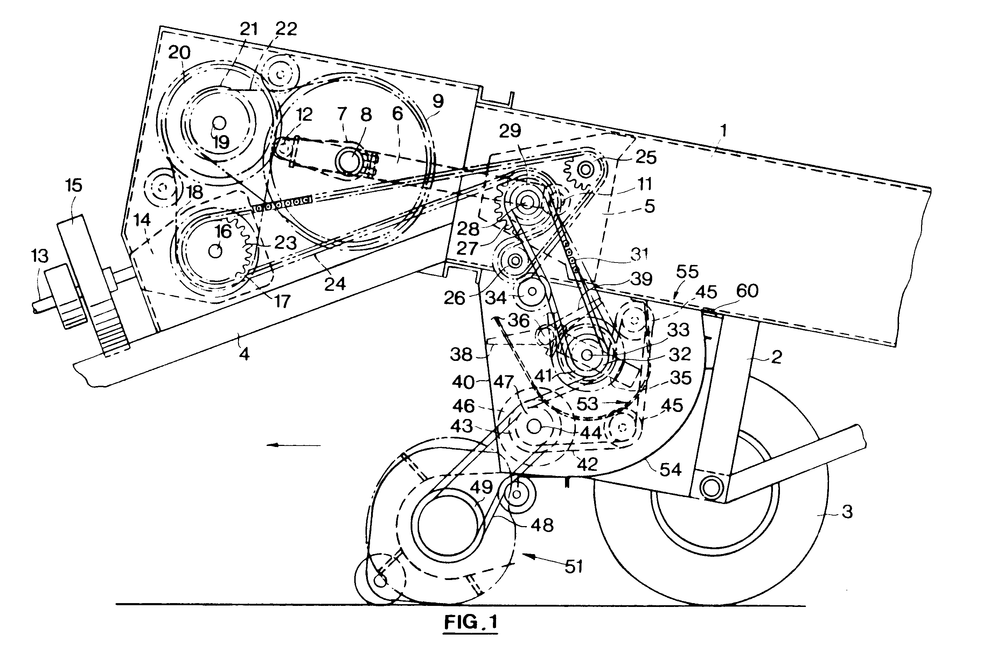

Referring to Figures 1 to 4 of the drawings, the baler comprises a bale case or chamber 1 mounted on a frame 2 which is supported by wheels 3. A tongue or draw bar 4 extends forwardly from the bale case 1 for attachment to a tractor or other vehicle used for towing the baler, this vehicle not being shown. A plunger 5 is mounted for reciprocation within the bale case 1 and is attached by a connecting rod 6 to a crank arm 7 attached to a shaft 8 which carries a sprocket 9. The connecting rod 6 is pivotally attached to the plunger at 11 and pivotally attached at its other end to the crank arm 7 at 12. A drive shaft 13 is adapted for connection to the power take-off (PTO) of the tractor or other vehicle and is also connected to a gear box 14 on the baler via a flywheel 15. The gear box 14 has an output shaft 16 which carries a sprocket 17 around which a chain 18 passes to a sprocket 20 of larger diameter on a shaft 19, this shaft also carrying a smaller diameter sprocket 21 coupled by a chain 22 to the sprocket 9 on the shaft 8. This conventional arrangement effects a speed reduction for the rotation of the sprocket 9 from the gear box 14, rotation of the sprocket 9 serving to reciprocate the plunger 5 within the bale case 1 by virtue of the crank 7.

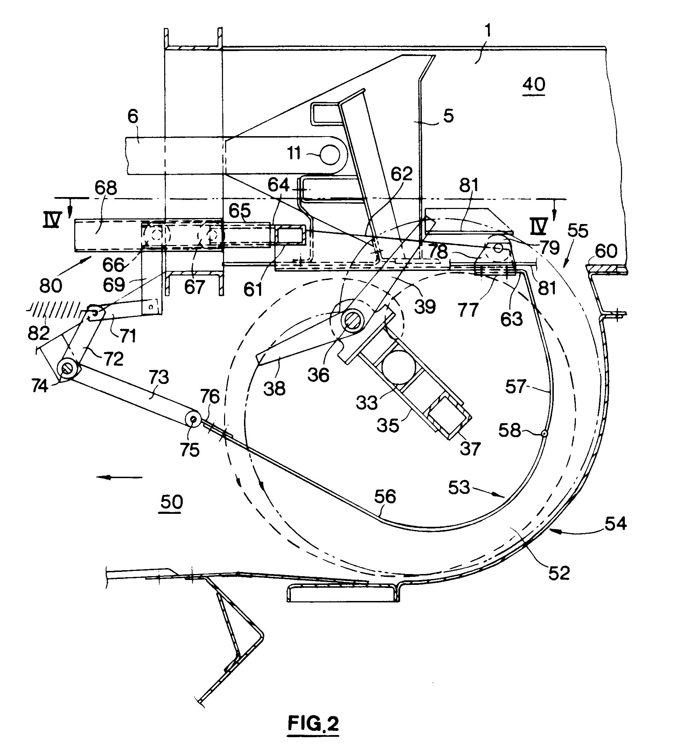

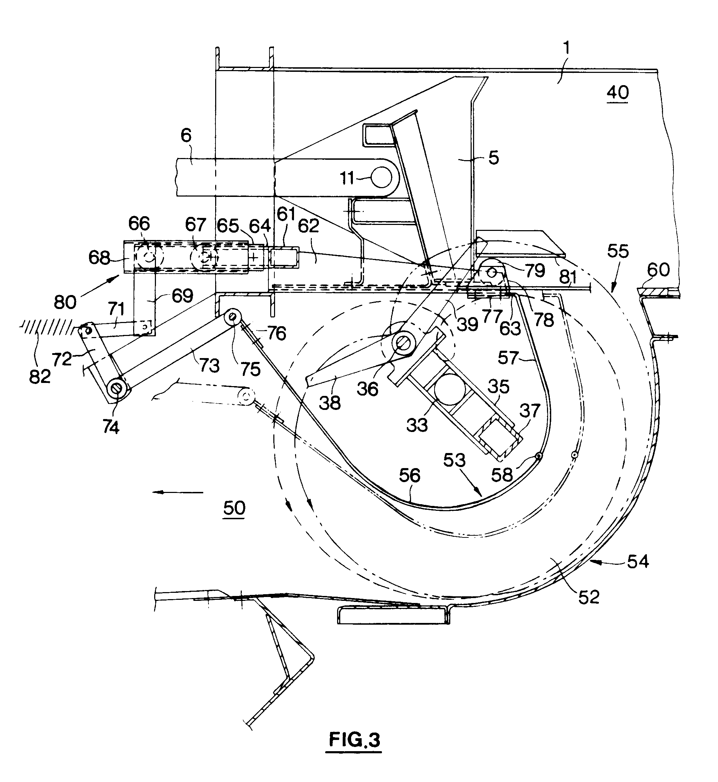

The output shaft 16 of the gear box 14 also carries a sprocket 23 around which passes a chain 24 which extends around idler sprockets 25 and 26 and a drive sprocket 27 carried by a shaft 28. The shaft 28 carries a further sprocket 29 around which passes a chain 31 extending around a sprocket 32 provided on a further shaft 33. The chain 31 returns to the sprocket 29 via an idler sprocket 34. In fact, two shafts 33 are provided, one at each side of the machine, and rotatably mounted in respective side walls 40 of the baler. Arms 35 are connected at their centres to respective shafts 33 and carry at one outer end a tine bar 36; the tine bar being rotatably mounted with respect to these arms. The arms 35 are in fact the limbs of a U-shaped frame, the base portion of which is a beam 37 of square section as seen in Figures 2 and 3 and which is driven from the sprocket 32 on one of the shafts 33.

The tine bar 36 carries two sets of generally opposed alternating tines in the form of a first set of packer tines 38 and a second set of stuffer tines 39. The stuffer tines 39 are longer than the packer tines 38 and the arrangement and operation of these feeder means is generally similar to that disclosed in EP-A-0.148.537 to which reference already has been made hereabove and the disclosure of which is included herein by reference. Alternatively, the feeder means employed in the present invention equally could be generally similar to the feeder means shown and described in EP-A-0.236.578, the disclosure of which again is included herein by reference.

Returning to Figure 1 of the drawings, the shaft 33 carries a pulley 41 around which a belt 42 extends to drive a pulley 43 on a shaft 44, the belt 42 also extending around two idler pulleys 45. The components 41 to 45 are duplicated, one set being on either side of the machine and the shafts 44 forming part of respective stub augers 46. One of the shafts 44 carries a further pulley 47 around which a belt 48 extends to drive a further pulley 49 on a crop pick-up device 51. In operation of the machine, crop material is picked up from the ground by the pick-up device 51 which feeds it to the stub augers 46 which then consolidate the crop material centrally of the baler for transfer into the inlet opening or mouth 50 of a feeder duct of chamber 52 defined in part by opposed curved walls 53 and 54 and which terminates at an inlet opening 55 of the bale case 1. In other words, the bale case 1 is provided with an inlet opening 55 in a lower wall thereof and which communicates with a feeder duct 52 which curves downwardly and forwardly therefrom to terminate in a forwardly facing open crop receiving mouth 50. The feeder duct 52 is defined by transversely opposite, generally flat side walls and a pair of curved opposed walls 53, 54 extending between said transversely opposite walls.

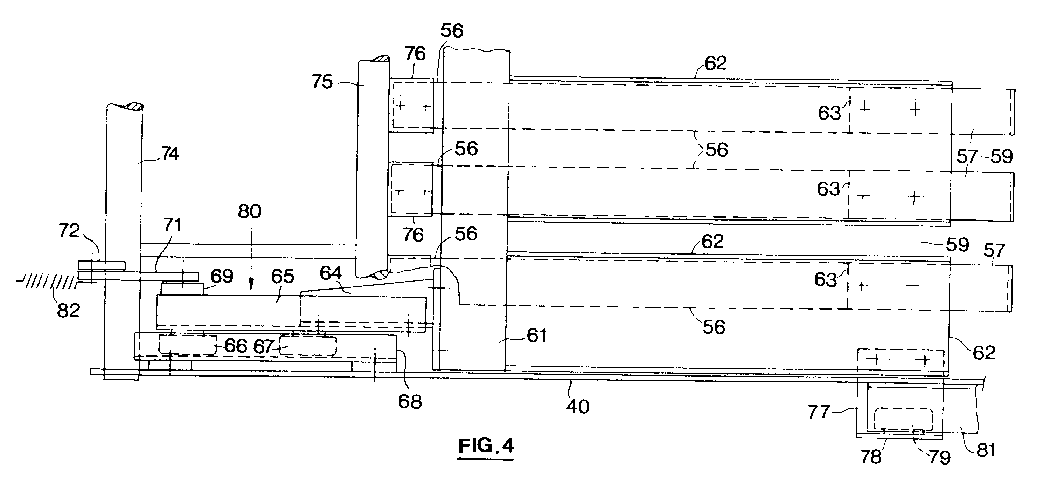

The opposed curved walls 53 and 54 of the feeder duct 52 are movable relative to each other by way of the innermost wall as seen with respect to the radius of curvature of the feeder duct 52, being movably mounted relative to the outermost wall 54 which itself preferably is fixed. The innermost wall 53 comprises two portions 56 and 57 pivotally interconnected by a pivot 58; each portion being made up of a series of curved slats (as can be seen in Figure 4) which are spaced apart transversely of the machine and which thus provide slots 59 therebetween through which the tines 38 and 39 can extend to engage crop material and feed it into the feeder duct 52. It thus will be noted that, as seen with respect to the radius of curvature of the feeder duct, the feeder means, which basically consist of the packer tines 38 and stuffer tines 39 are movably mounted inwardly of the innermost curved wall 53, which itself is movable to-and-from the axis of rotation of said feeder means.

The upper end of the feeder duct inner wall portion 57 is attached to a transverse beam 61 by way of a plurality of U-shaped arms 62 attached at one end to the beam and at the other to turned-over ends 63 of respective pairs of slats. Inbetween adjacent pairs of U-shaped arms 62, alternate slots 59 defined by corresponding slats are extended for the passage therethrough and into the bale case 1 of the longer stuffer tines 39 and the needles (not shown) forming part of the conventional bale wrapping apparatus. The fact that the arms 62 block alternate slots 59 at the underside of the bale case 1 is immaterial because the shorter packer tines 38 which have paths aligned therewith do not enter into the bale case 1. The U-shaped arms 62 together form a wall portion of the bale case 1 which, as will be described hereafter in more details, is movable generally in a fore-and-aft direction relative to the bale case 1 so as to ensure that the fore-and-aft dimension of the bale case inlet opening 55 varies in unison with the feeder duct 52.

Attached to the respective ends of the transverse beam 61 are brackets 64 (Figure 4) which extend forwardly of the machine and are in turn attached to U-shaped members 65 on the vertical intermediate limbs of which are provided rollers 66 and 67. The rollers 66, 67 engage respective channels 68 which are mounted on the frame 2 of the baler and which are also U-shaped; the rollers being guided between upper and/lower guides provided by the two outer limbs of the channels while that the intermediate limbs thereof are generally vertical. An arm 69 is fixedly attached to, and depends from, each of the members 65 and is pivotally attached at its lower or free end to a further arm 71 which in turn is pivotally attached to an arm 72. Each arm 72 forms one half of a bell crank lever, the other half being an arm 73 and each bell crank lever being pivoted at 74 on the baler frame 2. The arm 73 of each bell crank lever is pivotally attached at its other end to a common pivot shaft 75 which extends across the width of the baler and from which extends a plurality of lugs 76 to which are attached respective ones of the slats making up the inner wall portion 56 of the feeder duct 52.

Thus, there is provided a carriage 80 to which the upper portion 57 of the inner feeder duct wall 53 is attached, this carriage comprising the components 69, 65, 64, 61 and 62. The two extreme arms 62 carry, at their rearmost ends, respective brackets 77 which extend under the respective sidewalls 40 of the bale case 1 and have upturned flanges 78 each of which carries a further roller 79. The two rollers 79 roll along respective tracks 81 provided on the outside of the walls 40 of the bale case l.

Looking now at Figures 2 and 3, it will be noted that the movable wall portion 56 and a corresponding portion of the fixed wall 54 define a generally fore-and-aft extending crop receiving portion of the feeder duct 52 terminating at its forward end in the mouth 50. In contrast therewith the movable wall portion 57 cooperates with a corresponding portion of the fixed wall 54 to define therebetween a generally upright and rearward portion of the feeder duct 52 which communicates with the bale case inlet opening 55.

In operation of the baler, crop material is fed to the feeder duct 52 from the pick-up 51 and enters the mouth 50. In normal operation, the packer tines 38 move crop material along the feeder duct 52 to the rearward and upper portion thereof. Before this material is stuffed into the bale case 1 by the stuffer tines 39 more crop material is fed into the feeder duct 52 by said stuffer tines 39, which, towards the end of their operative stroke finally stuff all material, which has accumulated in the feeder duct 62, into the bale case 1. During the packer stroke and as crop material is advanced into the generally upright and rearward portion of the feeder duct 52 it is compressed to some extent. As the packer fingers 38 retract and before the stuffer tines 39 feed further crop material into the feeder duct 52, this crop material expands again, at least when this crop material is "normal" dry hay or straw. Due to this recovering of the crop material from the compression, said crop material maintains contact at least with the opposed curved walls 53, 54 of the feeder duct 52 whereby this crop material tends to remain in its advanced position in the feeder duct 52 rather than to fall back.

Now, if the crop material has a high moisture content, be it wet straw, wet hay or indeed silage, there is no such natural resilience in the crop material whereby this crop material does not recover to any substantial degree from a compression when released. As a result, there is a tendency for such crop material to fall downwardly in the feeder duct 52 once released by the tines 38. To counteract this problem, the inner wall 53 of the feeder duct 52 is made movable towards the outer wall 54 in accordance with the invention.

There are basically two ways of adjusting the movable wall 53. One is to have an entirely automatic operation and the other is to have an adjustment in steps with an adjusted position being held until it is seen to be unsatisfactory. Essentially, the movable wall 53 needs to be positioned such that it is substantially in constant contact with the crop material delivered to the bale feeder duct 52 so as to prevent that material from falling down the feeder duct.

The preferred mode of operation is the automatic mode in which the movable wall 53 will be able to accommodate, automatically, varying sizes of charges of material introduced thereinto. For example, considering Figure 2 in which the feeder duct 52 is shown at its minimum, and assuming that an excessively large charge is delivered to the feeder duct 52, said charge will force upwardly the front portion 56 of the movable wall 53 which in turn will rotate the bell crank lever arms 73 anticlockwise and will thus rotate the associated arms 72 in a similar direction. This movement will result in the carriage 80 being moved to the left as seen in Figures 2, whereupon the wall portion 57 will be moved to the left, whereby the overall width of the bale feeder duct 52 is increased. That is, the vertical width of the infeed opening or mouth 50 of the feeder duct 52 is increased by way of the wall portion 56 being pivoted upwardly about the pivot 58, and the front-to-rear width of the feeder duct portion leading to the bale case inlet 55 is increased by way of the whole of the wall portion 57 moving to the left as described. It should be noted that whatever position the movable wall 53 adopts, it always maintains a converging throat or initial infeed portion 50, and a diverging discharge portion and this is an important aspect of the present invention.

Once that large charge of crop material is pushed into the upper portion of the bale feeder duct 52, where it is compressed by the packer tines 38, it may be that that portion of the duct needs to be even wider and this can be effected automatically by that compressed crop material pushing on the wall portion 57 and thus moving the carriage 80 further to the left as seen in Figures 2 and 3. This movement will rotate the bell crank levers 72, 73 further in an anticlockwise direction and thus raise even further the portion 56 of the wall 53.

Assuming now that there is no excessively compressed material in the upper portion of the bale feeder duct 52 and that the next incoming charge is of average size, then the movable wall 53 of the duct will automatically revert to, or towards, the position in which the feeder duct is at its narrowest (Figure 2 position). This is because the weight of the wall portion 56 is such as to rotate the bell crank levers 72, 73 in a clockwise direction and thus move the carriage 80 to the right, as seen in Figures 2 and 3, and hence move the wall portion 57 to the right at the same time as the portion 56 is lowered. Thus, there is always the tendency for the movable wall 53 to be positioned, unless forced otherwise by the crop material coming into the feeder duct 52, such that the duct is at its narrowest. If the weight of the movable wall portion 56 is too great for the automatic adjustment system to operate smoothly, then it may be offset partially by the provision of springs 82 which act to rotate the bell crank levers 72, 73 anticlockwise, i.e. in a direction to raise the movable wall portion 56. The tension in the springs 82 even can be arranged such that the movable wall portion 56 will remain in any position in which it is placed.

When baling dry springy crops, such as straw, at high feed rates, the movable wall 53 normally will be positioned at or close to its extreme position shown in full lines in Figure 3 whereby the feeder duct 52 is at or near its maximum. In contrast therewith, when baling crop material with a high moisture content, such as silage, the movable wall 53 normally will be positioned at or close to its other extreme position shown in full lines in Figure 2, even when baling at high feed rates. Thereby bales of even density are formed irrespective of the difficult conditions presented by the baling of such crops. Of course, the movable walls 53 also will assume any intermediate position dependent on the flow rate of crop material passing through the feeder duct 52. Such an intermediate position is shown in phantom in Figure 3.

From what precedes it will be seen that the inner wall 53 of the feeder duct 52 (as seen with respect to the radius of curvature of said duct) is movable relative to the outer fixed wall 54 over its full length such that one cross sectional dimension of the feeder duct 52 is variable along the length of the feeder duct from the crop receiving mouth 50 thereof to the inlet opening 55 into the bale case 1. This is advantageous and indeed very much desirable to ensure that, whatever the position of the movable upper wall portion 57 is, the rear and upper portion of the feeder duct 52 always diverges towards the bale case inlet 55 as already explained.

Furthermore, also the bale case inlet opening 55 is adjustable in unison with the feeder duct 52 by the provision of a movable bale case wall portion 62 which is coupled to the upper end of the upper movable feeder duct wall portion 57; this coupling defining in part said inlet 55. Thereby it is avoided that the bale case inlet opening 55 would form a bottle neck for the charges of crop material when entering the bale case 1 from the feeder duct 52.

The bale case inlet opening 55 conveniently could be made adjustable because the inner curved wall 53 of the feeder duct 52 rather than the outer wall 54 thereof is made adjustable and a coupling between said inner movable wall 53 of the feeder duct 52 and a movable bale case wall portion 62 became possible without affecting any other operation of the baler. This coupling indeed in part defines the inlet opening 55 and the floating mounting thereof does not have any adverse effect on the baler operation. In contrast therewith, the opposite edge of the inlet opening 55 preferably should be fixed because a knife 60 has to be provided at this edge as is conventional to sever each wad of crop material in the bale case 1 from further crop material still in the feeder duct 52 upon each compression stroke of the plunger 5. Consequently, also the upper edge of the outer curved wall 54 of the feeder duct 52 preferably should be fixed which means that this wall could not be made adjustable along its full length which is not acceptable following the present invention.

Furthermore, it also has been found to be advantageous for the packing and stuffing operation of the feeder means 38, 39 to have the outer curved wall 54 of the feeder duct 52 at a fixed position relative to the paths of these feeder means, which implies that only the inner curved wall 53, i.e. the wall closest to the axis of the feeder means 38, 39, may be made adjustable.

It should be noted still that, even though the wall portions 56, 57 of the movable wall 53 are pivotally coupled to each other at 58, at least one wall portion; preferably the first wall portion 56; should be made of resilient material such as leaf spring type slats, so as to permit deformation thereof during adjustment movement of the inner wall 53 as otherwise this adjustment movement would be impossible. The resilient forces in this wall portion 56 resulting from said deformation may add to the gravitational forces which tend to urge the inner wall 53 back to the minimum feeder duct position.

It will be understood that the embodiment described hereabove is the preferred embodiment and that alternative embodiments are possible. As an example, the movable wall 53 can be operated other than automatically, for example by hydraulic or electrical actuation whereby it is positioned in a selected position which is the optimum position at any given point in the baling operation. In this arrangement, adjustment is made in steps, as has already been suggested hereabove and an adjusted position normally is held until it is seen to be unsatisfactory.

It also will be appreciated that the movable wall portions 56 and 57 and the pivotal coupling 58 therebetween can be replaced by a single resilient wall formed of transversely spaced apart leaf spring type slats which are coupled at their lower and forward ends to the lugs 76 and at their upper and rearward ends to arms 62 of the movable bale case wall portion. During operation and when the cross sectional dimension of the feeder duct 52 is varied, said resilient wall is deformed to accommodate simultaneously the pivotal movement of the crank arms 73 and the fore-and-aft movement of the arms 62.

It further also will be appreciated that, while the preferred embodiment of the invention has been described hereabove in connection with a so-called "in-line" baler comprising a bottom fed bale case, the instant invention also can be applied advantageously on an offset or side fed baler having the feeder duct 52 communicating with a bale case inlet opening in a side wall thereof.

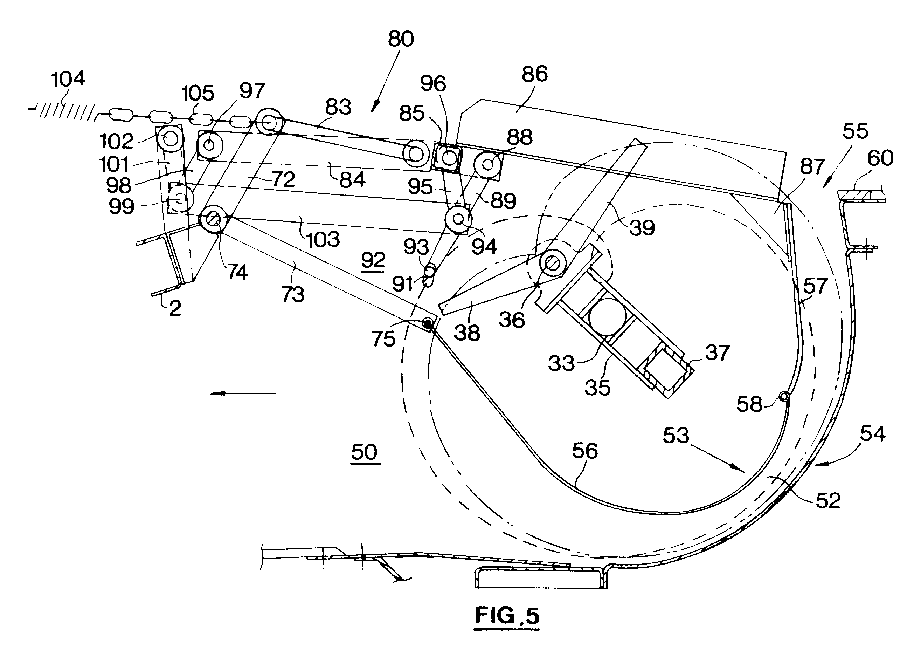

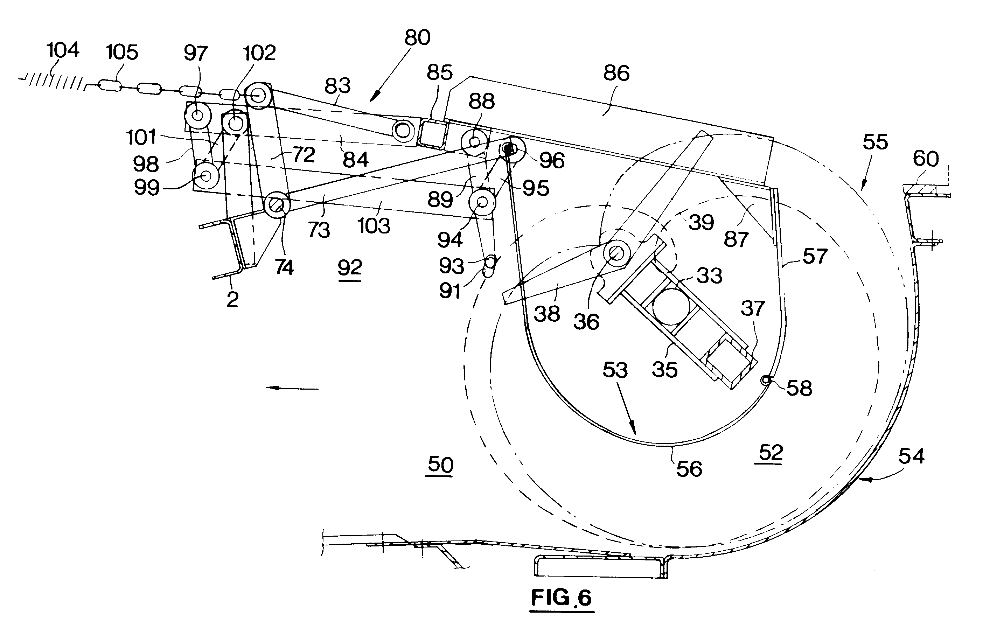

With reference to Figures 5 and 6, still another alternative arrangement of the invention will be described hereafter. These Figures 5 and 6 generally correspond to Figures 2 and 3 to the extent that they equally show the movable wall 53 in the position defining the narrowest bale chamber width respectively the maximum feeder duct width. In this alternative embodiment, similar components have like reference numerals and the essential difference is that the carriage 80 is no longer moved on rollers but by a series of pivotable levers as will now be described.

As with the first embodiment, there is a bell crank lever arrangement 72, 73 at each side of the bale feeder chamber. Arms 83 equivalent to the arms 71 are provided. However, these arms 83 are connected directly to the carriage 80 rather than through the intermediary of the arms 69 of the first embodiment. The carriage in this embodiment comprises transversely opposite members 84 (comparable to members 64 in the first embodiment), a transverse beam 85 of rectangular cross section (comparable to beam 61 of the first embodiment), and members 86 (comparable to the members 62 of the first embodiment) which are coupled by fillets 87 to the upper ends of corresponding slats 57 of the wall 53.

The carriage 80 is mounted at each side of the baler on a linkage arrangement as follows : The carriage 80 is pivotally attached at each side at 88 to one end of a link 89, the other end of which is both pivotable and slidable in a slot 91 provided in a corresponding wall portion 92 of the frame 2 by way of a pivot pin 93. Each link 89 is pivoted at its centre 94 to one end of a shorter link 95, the other end of which is pivotally attached at 96 to the frame 2 of the baler. The end of each carriage member 84 remote from the beam 85 is pivotally attached at 97 to one end of a link 98, the other end of which is pivotally attached at 99 to an end of a further link 101; in turn the end of this link being pivotally attached at 102 to the baler frame 2. The pivot 94 at the centre of each link 89 and the common pivot 99 of the corresponding links 98 and 101 are interconnected by a link 103. Thus a parallelogram is provided on each transverse side of the carriage 80 and which is formed by the link 103, the portion of the carriage 80 between the pivotal attachments thereto of the links 98 and 89, the arm 98 itself, and the upper portion of the arm 89. In addition, a further parallelogram is provided again on each transverse side of the carriage 80 and with the links 95 and 101 being one opposed pair of arms thereof and with the other pair being formed by the link 103 on the one hand and the fixed distance between the two pivot points 96 and 102 on the baler frame 2 on the other hand.

Now assuming that the carriage 80 is moved to the left as seen in Figure 5 so as to change the feeder duct 52 from the minimum width (Figure 5) towards the maximum (Figure 6), the parallelograms undergo movements as follows : As the carriage 80 moves to the left, the links 89 are pivoted anticlockwise about their pivots 93 in the slots 91 thus taking with them the centre pivots 94 and hence also the links 95. Actually the pivots 94 in fact move along arcs around the fixed pivot points 96 of the links 95 on the frame 2 and therefore cause the links 89 to move downwardly, which movement is accomodated by the engagement of the end pivots 93 thereof in the slots 91. At the same time, the top pivots 88 of the links 89 to the carriage 80 are rotated anticlockwise, as seen in Figure 5, about the centre pivots 94 and thus these top pivots 88 move along arcs which effectively lift said top pivots 88 relative to the centre pivots 94. Clearly, as the pivots 94 are moved downwardly relative to the frame 2 and the pivots 88 are moved upwardly relative to the pivots 94 these two movements cancel each other whereby the pivots 88 move rectilinearly. It will be appreciated that the other links 98 and 101 of the two parallelograms move correspondingly and the details thereof need not be described here. The overall result is that the carriage 80 is moved rectilinearly and the required movement of the movable wall 53 effected. Clearly, the reverse rectilinear movement takes place when the carriage 80 is moved to the right, as seen in Figures 5 and 6.

In summary, the carriage 80 is movably mounted, in accordance with this alternative embodiment, on the frame of the baler by first and second parallelogram linkage arrangements having a common first link 103. The first parallelogram linkage arrangement further also comprises a portion 84 of the carriage 80 and first and second arms 89, 98 pivotally connected to respectively said portion 84 of the carriage 80 and the common first link 103. The first arm 89 is extended beyond its pivotal coupling with the common first link 103 for slideably and pivotally engaging at its free end in an elongate slot 91 in a frame member 92. The second parallelogram linkage arrangement further also comprises a portion of the frame 2 of the baler and third and fourth arms 95, 101 pivotally connected to respectively said portions of the frame and the common first link 103.

While it is very well conceivable that only one such twin or double parallelogram linkage arrangement including a common first link 103, is provided for movably supporting the carriage 80 on the frame, it will be appreciated that preferably one such double parallelogram linkage arrangement is provided at each transverse side of the carriage 80.

As with the first embodiment, springs 104 can be provided in order to facilitate movement of the movable wall 53 to the widest bale feeder duct position. In this case, each spring 104 is attached at one end to a selected link of an associated chain 105 which in turn is attached to the corresponding arm 72 of the bell crank lever.

As with the first embodiment, the arrangement of Figures 5 and 6 can be operated automatically or adjusted to a selected movable wall position by hydraulic or electrical means, for example. Again, in this embodiment, it is a feature that the throat 50 always converges from the mouth thereof and the remainder of the duct 52 diverges to the bale case inlet opening 55 irrespective of the position of the movable wall 53 relative to the fixed wall 54.

It is also possible to use components of the baler which are, in some way, sensitive to the loading of the baler for controlling the position of the movable wall 53. For example, the windguard conventionally provided over the pick-up mechanism 51, but which is not shown in the accompanying drawings, moves generally vertically to accomodate varying thicknesses of crop material picked up by the pick-up mechanism and fed as a layer or wad to the feeder duct 52. This movement can be used to vary the position of the feeder duct movable wall 53 accordingly. Alternatively, the torque on a drive shaft or on the shaft of the windguard, which is representative of the baler loading, can be sensed and used to adjust the position of the feeder duct movable wall 53.

If desired, hay dogs can be incorporated into the feeder duct. Such hay dogs are displaced outwardly of the duct when crop material is fed thereinto, and spring back into the duct thereafter so as to help retain the crop material in position and hence prevent is from falling back down the feeder duct.

It will be seen that the present invention provides a very effective solution to the problems of the prior art balers described in the introduction of this specification.

## Claims

1.  A baler comprising :
    - a bale case (1) extending generally fore-and-aft with respect to the intended direction of movement of the baler and having an inlet opening (55) in the lower wall thereof;
    - a plunger (5) mounted for reciprocation within the bale case (1) and back-and-forth across the inlet opening (55) therein for compressing successive charges of crop material fed through said inlet opening (55) into said bale case (1) to form a bale thereof;
    - a feeder duct (52) communicating at one end with the inlet opening (55) in the bale case (1) and curving downwardly and forwardly therefrom and terminating in a lower, forwardly facing open crop receiving mouth (50) positioned generally beneath the level of the bale case (1); this feeder duct (52) comprising, as considered with respect to the radius of curvature thereof, inner and outer curved wall means (53, 54) of which the inner wall means (53), on the one hand and as seen in the direction of movement of the crop material through said duct (52), is formed by transversely spaced apart elongate members defining slots (59) therebetween and, on the other hand and again as considered with respect to said direction of movement of the crop material, includes a first wall portion (56) extending generally from said crop receiving mouth (50) to an intermediate point (58) along the length of the feeder duct (52) and a second wall portion (57) connected to said first wall portion (56) at said intermediate point (58) and extending therefrom to generally said inlet opening (55) in the bale case (1); said first wall portion (56) converging relative to the outer wall means (54) as seen in said direction of movement of the crop material through said duct (52) and said second wall portion (57) being movable relative to the outer wall means (54) by crop material being fed into the feeder duct (52); and

- feeder means (38, 39) movably mounted, as seen with respect to the radius of curvature of the feeder duct (52), inwardly of the inner wall means (53) and extending through said slots (59) into the feeder duct (52); said feeder means (38, 39), in use, being cooperable with the feeder duct (52) to pack crop material into said duct (52) for accumulating a charge of said material therein and then to stuff this charge from said feeder duct (52) into the bale case (1), and characterized in that :

- the inner wall means (53) is movable, by said crop material fed into the feeder duct (52), relative to the outer wall means (54) substantially along the entire length of the feeder duct (52) from the crop receiving mouth (50) thereof to the inlet opening (55) into the bale case (1) such that the cross sectional dimension of the feeder duct (52), as seen in the direction of the radius of curvature, is variable substantially along said entire length of said feeder duct (52);

- said first portion (56) of the inner wall means (53) has said converging configuration with respect to the outer wall means (54) irrespective of the relative position of said inner wall means (53) with respect to said outer wall means (54); and

- said second portion (57) diverges relative to the outer wall means (54) as seen in the direction from said intermediate point (58) to said bale case inlet opening (55); said diverging configuration being present irrespective of the relative position of said inner wall means (53) with respect to said outer wall means (54).

2. A baler according to claim 1, characterized in that the outer wall means (35) is fixedly mounted.

3. A baler according to any of the preceding claims characterized in that the second wall portion (57) is coupled, at its end opposite to its connection to the first wall portion (56), to a wall portion (62) of the bale case (1); said coupling between a bale case wall portion (62) and the feeder duct second wall portion (57) defining in part the bale case inlet opening (55) and being movable generally in the fore-and-aft direction of the bale case (1) to ensure that, in use and as said cross sectional dimension of the feeder duct (52) is varied, said bale case inlet opening (55) is varied accordingly.

4. A baler according to claim 3, characterized in that the first and second wall portions (56, 57) are pivotally interconnected at their facing ends (58) whereby one portion can pivot with respect to the other portion during adjustment of inner wall means (53) relative to the outer wall means (54).

5. A baler according to claim 3, characterized in that one of the wall portions (56, 57) of the inner wall means (53) is made of resilient material whereby the shape of this resilient portion (56) can vary during adjustment movement of the inner wall means (53) relative to the outer wall means (54).

6. A baler according to any of the claims 3 to 5, characterized in that the first wall portion (56) of said inner wall means (53) extends substantially in a generally fore-and-aft direction from the connection (58) thereof to the second wall portion (57) which itself extends generally in an upward direction from said connection (58); said generally fore-and-aft and upwardly extending wall portions (56, 57) defining in part, at their ends opposite to the connection (58) therebetween, respectively the crop receiving mouth (50) and the bale case inlet opening (55).

7. A baler according to any of the claims 3 to 6, characterized in that adjustment means (80, 69, 71, 72, 73/80, 83, 72, 73) interconnect the respective ends of both wall portions (56, 57) opposite to the common connection (58) therebetween; the arrangement being such that, in use:

- movement of one of said opposite ends induces a corresponding movement to the other opposite end;

- the end of the first wall portion (56) opposite to the connection thereof to the second wall portion (57) is movable in a generally upright direction; and

- the dimension of both the bale case opening (55) and the mouth (50) are increased, respectively decreased simultaneously.

8. A baler according to claim 7, characterized in that the adjustment means (80, 69, 71, 72, 73/80, 83, 72, 73) comprise :
- a carriage (80) coupled to the movable bale case wall portion (62) and movable rectilinearly in the general fore-and-aft direction of the bale case (1); and
- linkage means (69, 71, 72,73/83, 72, 73) coupling the carriage (80) to the end of the feeder duct first wall portion (56) opposite to the connection thereof to the feeder duct second wall portion (57) to ensure that any movement of the carriage (80) in the generally fore-and-aft direction of the bale case (1) is translated into a movement of said end of the feeder duct first wall portion (56) in the generally upright direction and vice versa.

9. A baler according to claim 8, characterized in that the carriage (80) is provided with rollers (66, 67) engageable with tracks (68) mounted on the bale case (1).

10. A baler according to claim 9, characterized in that the bale case movable wall portion (62) also is provided with rollers (79) engageable with tracks (81) mounted on the bale case (1).

11. A baler according to claim 8, characterized in that the carriage (80) is movably mounted on the frame (2) of the baler by first and second parallelogram linkage arrangements having a common first link (103);
the first parallelogram linkage arrangement further also comprising a portion (84) of the carriage (80) and first and second arms (89, 98) pivotally connected to respectively said portion (84) of the carriage (80) and the common first link (103) and said first arm (89) being extended beyond its pivotal coupling with the common first link (103) for slideably and pivotally engaging at its free end in an elongate slot (91) in a frame member (92) and
the second parallelogram linkage arrangement further also comprising a portion of the frame (2) of the baler and third and fourth arms (95, 101) pivotally connected to respectively said portion of the frame (2) and the common first link (103).

12. A baler according to any of the claims 8 to 11, characterized in that the linkage means (69, 71, 72, 73/83, 72, 73) comprises a bell crank lever (72, 73) which is pivotally mounted on the frame (2) of the baler and which is pivotally coupled at one end (75) to the end of the feeder duct first wall portion (56) opposite to the connection thereof to the feeder duct second wall portion (57) and pivotally coupled at the other end to the carriage (80).

13. A baler according to claim 12, characterized in that the bell crank lever (72, 73) is directly pivotally attached at said one end to the feeder duct first wall portion (56) and is pivotally coupled at said other end to the carriage (80) through the intermediary of one or more further links (71, 69/83).

14. A baler according to any of the claims 7 to 13, characterized in that the first wall portion (56) of the inner wall means (53) is disposed such that it tends to fall under its own weight to minimize the spacing thereof with respect to the associated portion of the outer wall means (54) unless otherwise constrained to move away from that portion.

15. A baler according to claim 14, characterized in that weight- compensation means (82/104, 105) are provided for the first wall portion (56) of the inner wall means (53).

16. A baler according to any of the preceding claims, characterized in that movement of the inner wall means (53) of the feeder duct (52) is controlled by sensing the loading of the baler.

17. A baler according to claim 16, characterized in that the loading of the baler is sensed by detecting movement of a windguard forming part of the baler.

18. A baler according to claim 16, characterized in that the loading of the baler is sensed by detecting the torque in a rotary component of the baler.

**Revendications**

1. Ramasseuse-presse comportant :
- une cage à balles (1) qui s'étend, d'une manière générale, longitudinalement par rapport au sens de déplacement prévu de la ramasseuse-presse, et comporte un orifice d'entrée (55) dans sa paroi inférieure;
- un piston (5) monté en vue d'effectuer un mouvement alternatif a l'intérieur de la cage à balles (1) en allant et venant à travers l'orifice d'entrée (55) défini dans celle-ci, pour comprimer des charges successives de produits de récolte introduite à travers ledit orifice d'entrée (55) dans ladite cage a balles (1), afin de les transformer en une balle;

- un canal de chargement (52) qui communique au niveau de l'une de ses extrémités avec l'orifice d'entrée (55) dans la cage à balles (1) et s'incurve vers le bas et vers l'avant depuis celui-ci pour se terminer par une bouche de réception de récolte ouverte inférieure (50) tournée vers l'avant et positionnée, d'une manière générale, au-dessous du niveau de la cage à balles (1); ce canal de chargement (52) comporte, lorsqu'on le considère par rapport à son rayon de courbure, des moyens formant parois courbes intérieure et extérieure (53, 54) dont les moyens formant paroi intérieure (53) sont, d'une part et lorsqu'on les considère dans le sens de déplacement des produits de récolte à travers ledit canal (52), formés par des organes allongés, espacés les uns des autres transversalement qui définissent entre eux des fentes (59) et, d'autre part et lorsque, là aussi, on les considère par rapport audit sens de déplacement des produits de récolte, comportent une première partie de paroi (56) qui s'étend, d'une manière générale, depuis ladite bouche de réception de récolte (50) jusqu'à un point intermédiaire (58) sur la longueur du canal de chargement (52), et une seconde partie de paroi (57) raccordée a ladite première partie de paroi (56) au niveau dudit point intermédiaire (58) et s'étendant depuis celui-ci sensiblement jusqu'audit orifice d'entrée (55) dans la cage a balles (1); ladite première partie de paroi (56) convergeant par rapport aux moyens formant paroi extérieure (5), lorsqu'on la considère dans ledit sens de déplacement des produits de récolte a travers ledit canal (52), tandis que ladite seconde partie de paroi (57) est mobile par rapport aux moyens formant paroi extérieure (54) sous l'effet des produits de récolte introduits dans le canal de chargement (52); et

- des moyens de chargement (38, 39) montés, lorsqu'on les considère par rapport au rayon de courbure du canal de chargement (52), mobiles vers l'intérieur des moyens formant paroi intérieure (53) et s'étendant à travers lesdites fentes (59) jusque dans le canal de chargement (52); lesdits moyens de chargement (38, 38) étant, en service, aptes à coopérer avec le canal de chargement (52) pour tasser les produits de récolte dans ce dernier en vue d'y accumuler une charge desdits produits de récolte et puis de bourrer cette charge dudit canal de chargement 52 dans la cage à balles (1), et caractérisée en ce que :

- les moyens formant paroi intérieure (53) sont mobile sous l'effet desdits produits de récolte introduits dans le canal de chargement (52), par rapport aux moyens formant paroi extérieure (54) sensiblement sur la totalité de la longueur du canal de chargement <52>, de la bouche de réception de récolte (50) de celui-ci a l'orifice d'entrée (55) dans la cage à balles (1), de sorte que la dimension en section transversale du canal de chargement (52) peut, lorsqu'on la considère dans la direction du rayon de courbure, être modifiée sur sensiblement la totalité de la longueur dudit canal de chargement (52);

- ladite première partie (56) des moyens formant paroi intérieure (53) possède ladite configuration convergente par rapport aux moyens formant paroi extérieure (54) indépendamment de la position relative desdits moyens formant paroi intérieure (53) par rapport auxdits moyens formant paroi extérieure (54); et

- ladite seconde partie (57) diverge par rapport aux moyens formant paroi extérieure (54), lorsqu'on la considère dans la direction allant dudit point intermédiaire (58) audit orifice d'entrée (55) de la cage à balles; ladite configuration convergente existant indépendamment de la position relative desdits moyens formant paroi intérieure (53) par rapport auxdits moyens formant paroi extérieure (54).

2. Ramasseuse-presse selon la revendication 1, caractérisée en ce que les moyens formant paroi extérieure (35) sont montés fixes.

3. Ramasseuse-presse selon l'une quelconque des revendications précédentes, caractérisée en ce que la seconde partie de paroi (57) est, au niveau de son extrémité opposée à son raccordement à la première partie de paroi (56), accouplée avec une partie de paroi (62) de la cage à balles (1); ledit accouplement entre une partie de paroi (62) de la cage à balles et la seconde partie de paroi (57) du canal de chargement définissant en partie l'orifice d'entrée (55) de la cage à balles et étant mobile, d'une manière générale, dans le sens longitudinal de la cage à balles (1) pour faire en sorte qu'en service et lorsque ladite dimension en section transversale du canal de chargement (52) est modifiée, ledit orifice d'entrée de la cage à balles soit modifié d'une manière correspondante.

4. Ramasseuse-presse selon la revendication 3, caractérisée en ce que les première et seconde parties de paroi (56, 57) sont raccordées entre elles d'une manière pivotante au niveau de leurs extrémités en vis-à-vis (58), pour qu'ainsi l'une des parties puisse pivoter par rapport à l'autre partie pendant un ajustement des moyens formant paroi intérieure (53) par rapport aux moyens formant paroi extérieure (54).

5. Ramasseuse-presse selon la revendication 3, caractérisée en ce que l'une des parties de paroi (56, (57) des moyens formant paroi intérieure (53) est faite d'un matériau élastique, pour qu'ainsi la forme de cette partie élastique (56) puisse varier pendant un mouvement d'ajustement des moyens formant paroi intérieure (53) par rapport aux moyens formant paroi extérieure (54).

6. Ramasseuse-presse selon l'une quelconque des revendications 3 à 5, caractérisée en ce que la première partie de paroi (56) desdits moyens formant paroi intérieure (53) s'étend sensiblement dans une direction, dans l'ensemble, longitudinale depuis son raccordement (58) à la seconde partie de paroi (57) qui elle-même s'étend, d'une manière générale, dans une direction orientée vers le haut depuis ledit raccordement (58); lesdites parties de paroi (56, 57) qui s'étendent, d'une manière générale, longitudinalement et vers le haut définissant en partie respectivement, au niveau de leurs extrémités opposées à leur raccordement (58) réciproque, la bouche de réception de récolte (50) et l'orifice d'entrée (55) de la cage à balles.

7. Ramasseuse-presse selon l'une quelconque des revendications 3 à 6, caractérisée en ce que des moyens d'ajustement (80, 69, 71, 72, 73/80, 83, 72, 73) relient entre elles les extrémités respectives des deux parties de paroi (56, 57), opposées au raccordement commun (58), réciproque de celles-ci; la conception étant telle qu'en service :
- un déplacement de l'une desdites extrémités opposées entraîne un déplacement correspondant de l'autre extrémité opposée;
- l'extrémité de la première partie de paroi (56) opposée au raccordement de celle-ci à la seconde partie de paroi (57), étant mobile dans une direction, dans l'ensemble, verticale; et
- la dimension aussi bien de l'orifice (55) de la cage à balles que de la bouche (50) est augmentée, respectivement diminuée simultanément.

8. Ramasseuse-presse selon la revendication 7, caractérisée en ce que les moyens d'ajustement (80, 69, 71, 72, 73/80, 83, 72, 73) comportent :
- un chariot (80) accouplé avec la partie de paroi mobile (62) de la cage à balles et mobile d'une manière rectiligne dans la direction générale longitudinale de la cage à balles (1); et
    des moyens formant tringlerie (69, 71, 72, 73/83, 72, 73) qui accouplent le chariot (80) avec l'extrémité de la première partie de paroi (56) du canal de chargement, opposée au raccordement de celle-ci à la seconde partie de paroi (57) du canal de chargement, pour faire en sorte que tout déplacement du chariot (80) dans la direction sensiblement longitudinale de la cage à balles (1) soit converti en un déplacement de ladite extrémité de ladite première partie de paroi (56) du canal de chargement dans la direction, dans l'ensemble, verticale et vice versa.

9. Ramasseuse-presse selon la revendication 8, caractérisée en ce que le chariot (80) est pourvu de galets (66, 67) aptes à venir en prise avec des chemins de roulement (68) montés sur la cage à balles (1).

10. Ramasseuse-presse selon la revendication 9, caractérisée en ce que la partie de paroi mobile (62) de la cage à balles est également pourvue de galets (79) aptes à venir en prise avec des chemins de roulement (81) montés sur la cage à balles (1).

11. Ramasseuse-presse selon la revendication 8, caractérisée en ce que le chariot (80) est monté mobile sur le châssis (2) de la ramasseuse-presse au moyen de premier et second dispositifs de tringlerie en parallélogramme comportant une première tringle (103) commune;
    le premier dispositif de tringlerie en parallélogramme comportant également une partie (84) du chariot (80) et des premier et second bras (89, 98) respectivement reliés d'une manière pivotante à ladite partie (84) du chariot (80) et a la première tringle (103) commune, ledit premier bras (89) se prolongeant au-delà de son accouplement pivotant avec la première tringle (103) commune en vue de venir, au niveau de son extrémité libre, en prise d'une manière coulissante et pivotante dans une fente allongée (91) définie dans un élément de châssis (92) et

le second dispositif de tringlerie en parallélogramme comportant également une partie du châssis (2) de la ramasseuse-presse et des troisième et quatrième bras (95, 101) respectivement reliés d'une manière pivotante a ladite partie du châssis (2) et à la première tringle (103) commune.

12. Ramasseuse-presse selon l'une quelconque des revendications 8 à 11, caractérisée en ce que les moyens formant tringlerie (69, 71, 72, 73/83, 72, 73) comportent un levier coudé (72, 73) monté pivotant sur le châssis (2) de la ramasseuse-presse et accouplé, d'une manière pivotante, au niveau de sa première extrémité (75), avec l'extrémité de la première partie de paroi (56) du canal de chargement, opposée au raccordement de celle-ci à la seconde partie de paroi (57) du canal de chargement et, au niveau de sa seconde extrémité, avec le chariot (80).

13. Ramasseuse-presse selon la revendication 12, caractérisée en ce que le levier coudé (72, 73) est, au niveau de sadite première extrémité, relié directement d'une manière pivotante à la première partie de paroi (56) du canal de chargement et, au niveau de sadite seconde extrémité, accouplé d'une manière pivotante avec le chariot (80) par l'intermédiaire d'au moins une tringle supplémentaire (71, 69/83).

14. Ramasseuse-presse selon l'une quelconque des revendications 7 & 13, caractérisée en ce que la première partie de paroi (56) des moyens formant paroi intérieure (53) est disposée de manière à avoir tendance & tomber sous l'effet de son propre poids afin de réduire au minimum son écartement par rapport a la partie associée des moyens formant paroi extérieure (54), à moins qu'elle ne soit soumise & une contrainte contraire l'obligeant a s'écarter de cette partie.

15. Ramasseuse-presse selon la revendication 14, caractérisée en ce qu'il est prévu des moyens compensateurs de poids (82/104, 105) pour la première partie de paroi (56) des moyens formant paroi intérieure (53).

16. Ramasseuse-presse selon l'une quelconque des revendications précédentes, caractérisée en ce qu'un déplacement des moyens formant paroi intérieure (53) du canal de chargement (52) est contrôlé par une détection de la charge de la ramasseuse-presse.

17. Ramasseuse-presse selon la revendication 16, caractérisée en ce que la charge de la ramasseuse-presse est détectée par la détection du déplacement d'un pare-vent faisant partie de la ramasseuse-presse.

18. Ramasseuse-presse selon la revendication 16, caractérisée en ce que la charge de la ramasseuse-presse est détectée par la détection du couple existant dans un organe rotatif de la ramasseuse-presse.

**Patentansprüche**

1. Ballenpresse mit:
   - einer Preßkammer (1), die sich allgemein in Längsrichtung bezüglich der beabsichtigten Bewegungsrichtung der Ballenpresse erstreckt und eine Einlaßöffnung (55) in ihrer unteren Wand aufweist,
   - einem Preßkolben (5), der für eine Hin- und Herbewegung in der Preßkammer (1) und in Rückwärts- und Vorwärtsrichtung über die Einlaßöffnung (55) hinweg beweglich befestigt ist, um aufeinanderfolgende Ladungen des Erntematerials zu komprimieren, das durch die Einlaßöffnung (55) in die Preßkammer (1) eingeführt wird, um einen Ballen aus diesem Erntematerial zu formen,
   - einem Zuführungskanal (52), der an einem Ende mit der Einlaßöffnung (55) der Preßkammer (1) in Verbindung steht und von dieser aus nach unten und nach vorne gekrümmt ist und in einer unteren nach vorne gerichteten offenen Erntematerial-Aufnahmemündung (50) endet, die allgemein unterhalb der Höhenlage der Preßkammer (1) liegt, wobei dieser Zuführungskanal (52) bei Betrachtung bezüglich seines Krümmungsradius innere und äußere gekrümmte Wandteile (53, 54) umfaßt, von denen das innere Wandteil (53) einerseits bei Betrachtung in der Bewegungsrichtung des Erntematerials durch den Kanal (52) durch in Querrichtung mit Abstand voneinander angeordnete langgestreckte Elemente gebildet ist, die zwischen sich Schlitze (59) bilden, und andererseits und wiederum bei Betrachtung in dieser Bewegungsrichtung des Erntematerials einen ersten Wandabschnitt (56), der sich allgemein von der Erntematerial-Aufnahmemündung (50) zu einem Zwischenpunkt (58) entlang der Länge des Zuführungskanals (52) erstreckt, und einen zweiten Wandabschnitt (57) einschließt, der mit dem ersten Wandabschnitt (56) an dem Zwischenpunkt (58) verbunden ist und sich von diesem aus allgemein zu der Einlaßöffnung (55) in der Preßkammer (1) erstreckt, wobei weiterhin der erste Wandabschnitt (56) bezüglich der äußeren Wandteile (54) bei Betrachtung in der Bewegungsrichtung des Erntematerials durch diesen Zuführungskanal (52) konvergiert und der zweite Wandabschnitt (57) gegenüber den äußeren wandteilen (54) durch Erntematerial bewegbar ist, das in den Zuführungskanal (52) eingeführt wird, und

- Zuführungseinrichtungen (30, 39), die bezüglich des Krümmungsradius des Zuführungskanals (52) beweglich innerhalb des inneren Wandteils (53) befestigt sind und sich durch die Schlitze (59) in den Zuführungskanal (52) erstrecken, wobei die Zuführungseinrichtungen (30, 39) im Betrieb mit dem Zuführungskanal (52) zusammenwirken, um Erntematerial in den Kanal (52) zu packen, um eine Ladung des Materials in diesem anzusammeln und dann diese Ladung von dem Zuführungskanal (52) in die Preßkammer (1) zu stopfen,
dadurch **gekennzeichnet,** daß das innere Wandteil (53) durch das in den Zuführungskanal (52) eingeleitete Erntematerial gegenüber dem äußeren Wandteil (54) im wesentlichen entlang der Gesamtlänge des Zuführungskanals (52) von dessen Erntematerial-Aufnahmemündung (50) zur Einlaßöffnung (55) in den Preßkanal (1) derart beweglich ist, daß die Querschnittsabmessung des Zuführungskanals (52) bei Betrachtung in Richtung des Krümmungsradius im wesentlichen entlang der Gesamtlänge des Zuführungskanals (52) veränderlich ist,

- der erste Abschnitt (56) des inneren Wanteils (53) die konvergierende Form bezüglich des äußeren Wandteils (54) unabhängig von der Relativstellung des inneren Wandteils (53) bezüglich des äußeren Wandteils (54) aufweist, und

- der zweite Abschnitt (57) bezüglich des äußeren Wandteils (54) bei Betrachtung in der Richtung von dem Zwischenpunkt (50) zu der Preßkammer-Einlaßöffnung (55) divergiert, wobei diese divergierende Form unabhängig von der Relativstellung der inneren Wandteile (53) bezüglich der äußeren Wandteile (54) vorhanden ist.

2. Ballenpresse nach Anspruch 1,
dadurch **gekennzeichnet,** daß das äußere Wandteil (35) starr befestigt ist.

3. Ballenpresse nach einem der vorhergehenden Ansprüche,
dadurch **gekennzeichnet,** daß der zweite Wandabschnitt (57) an seinem seiner Verbindung mit dem ersten Wandabschnitt (56) gegenüberliegenden Ende mit einem Wandabschnitt (62) der Preßkammer (1) gekoppelt ist, daß die Kopplung zwischen dem Preßkanal-Wandabschnitt (62) und dem zweiten Wandabschnitt (57) des Zuführungskanals teilweise die Preßkammer-Einlaßöffnung (55) umgrenzt und allgemein in der Vorwärts-Rückwärtsrichtung der Preßkammer (1) beweglich ist, um sicherzustellen, daß im Betrieb und bei einer Änderung der Querschnittsabmessung des Zuführungskanals (52) die Ballenkammer-Einlaßöffnung (55) entsprechend geändert wird.

4. Ballenpresse nach Anspruch 3,
dadurch **gekennzeichnet,** daß die ersten und zweiten Wandabschnitte (56, 57) an ihren aufeinander gerichteten Enden (58) schwenkbar miteinander verbunden sind, so daß ein Abschnitt bezüglich des anderen Abschnitts während der Einstellung des inneren Wandteils (53) bezüglich des äußeren Wandteils (54) verschwenkbar ist.

5. Ballenpresse nach Anspruch 3,
dadurch **gekennzeichnet,** daß einer der Wandabschnitte (56, 57) des inneren Wandteils (53) aus elastischem Material besteht, so daß sich die Form dieses elastischen Teils (56) während der Einstellbewegung des inneren Wandteils (53) gegenüber dem äußeren Wandteil (54) ändern kann.

6. Ballenpresse nach einem der Ansprüche 3 bis 5,
dadurch **gekennzeichnet,** daß sich der erste Wandabschnitt (56) des inneren Wandteils (53) im wesentlichen in einer allgemeinen Vorwärts-Rückwärtsrichtung von seiner Verbindung (58) mit dem zweiten Wandabschnitt (57) aus erstreckt, der sich selbst allgemein in einer nach oben gerichteten Richtung von der Verbindung (58) aus erstreckt, und daß die allgemein sich in Vorwärts-Rückwärtsrichtung und nach oben erstreckenden Wandabschnitte (56, 57) teilwei-

se an ihrer der Verbindung (58) gegenüberliegenden Enden zwischen sich die Erntematerial-Aufnahmemündung (50) bzw. die Preßkammer-Einlaßöffnung (55) bilden.

7. Ballenpresse nach einem der Ansprüche 3 bis 6,
dadurch **gekennzeichnet,** daß Einstelleinrichtungen (80, 69, 71, 72, 73/80, 83, 72, 73) die jeweiligen Enden beider Wandabschnitte (56, 57) gegenüberliegend zur gemeinsamen Verbindung (58) zwischen diesen Abschnitten miteinander verbinden und daß die Anordnung derart ist, daß im Betrieb:
   - die Bewegung eines der gegenüberliegenden Enden eine entsprechende Bewegung des anderen gegenüberliegenden Endes hervorruft,
   - das Ende des ersten Wandabschnittes (56) gegenüberliegend zu dessen Verbindung mit dem zweiten Abschnitt (57) in einer allgemein aufwärts gerichteten Richtung beweglich ist, und
   - die Abmessung sowohl der Preßkammeröffnung (55) als auch der Mündung (50) gleichzeitig vergrößert bzw. verkleinert wird.

8. Ballenpresse nach Anspruch 7,
dadurch **gekennzeichnet,** daß die Einstelleinrichtungen (80, 69, 71, 72, 73/80, 83, 72, 73) folgende Teile umfassen:
   - einen Schlitten (80), der mit dem beweglichen Preßkammer-Wandabschnitt (82) gekoppelt und geradlinig in der allgemein in Vorwärts-Rückwärtsrichtung verlaufenden Richtung der Preßkammer (1) beweglich ist und
   - Gestängeteile (69, 71, 72, 73/83, 72, 73), die den Schlitten (80) mit dem Ende des ersten Wandabschnitte (56) des Zuführungskanals gegenüberliegend zu dessen Verbindung mit dem zweiten Wandabschnitt (57) des Zuführungskanals koppeln, um sicherzustellen, daß irgendeine Bewegung des Schlittens (80) in der allgemein in Vorwärts-Rückwärtsrichtung verlaufenden Richtung der Preßkammer (1) in eine Bewegung des Endes des ersten Wandabschnittes (56) des Zuführungskanals in der allgemein nach oben gerichteten Richtung und umgekehrt umgesetzt wird.

9. Ballenpresse nach Anspruch 8,
dadurch **gekennzeichnet,** daß der Schlitten (80) mit Rollen (66, 67) versehen ist, die mit an der Preßkammer (1) befestigten Führungen (68) in Eingriff bringbar sind.

10. Ballenpresse nach Anspruch 9,
dadurch **gekennzeichnet,** daß der bewegliche Wandteil (62) der Preßkammer -ebenfalls mit Rollen (79) versehen ist, die mit an dem Preßkammer (1) befestigten Führungen (81) in Eingriff bringbar sind.

11. Ballenpresse nach Anspruch 8,
dadurch **gekennzeichnet,** daß der Schlitten (80) auf dem Rahmen (2) der Ballenpresse mit Hilfe von ersten und zweiten Parallelogramm-Gestängeanordnungen beweglich befestigt ist, die ein gemeinsames erstes Gestänge (103) aufweisen,
   - daß die erste Parallelogramm-Gestängeanordnung weiterhin einen Teil (84) des Schlittens (80) und erste und zweite Arme (89, 98) umfaßt, die schwenkbar mit dem Teil (84) des Schlittens (80) bzw. mit dem ersten Gestänge (103) verbunden sind, wobei sich der erste Arm (89) über seine Schwenkverbindung mit dem gemeinsamen ersten Gestänge (103) hinaus erstreckt, um verschiebbar und schwenkbar an seinem freien Ende mit einem langgestreckten Schlitz (91) in einem Rahmenteil (92) in Eingriff zu kommen, und
   - daß die zweite Parallelogramm-Gestängeanordnung weiterhin einen Teil des Rahmens (2) der Ballenpresse und dritte und vierte Arme (95, 101) umfaßt, die schwenkbar mit dem Teil des Rahmens (2) bzw. dem gemeinsamen ersten Gestänge (103) verbunden sind.

12. Ballenpresse nach einem der Ansprüche 8 bis 11,
dadurch **gekennzeichnet,** daß die Gestängeeinrichtungen (69, 71, 72, 73/83, 72, 73) einen Winkelhebel (72, 73) umfassen, der schwenkbar an dem Rahmen (2) der Ballenpresse befestigt ist und der schwenkbar an einem Ende (75) mit demjenigen Ende des ersten Wandabschnittes (56) des Zuführungskanals gekoppelt ist, der dessen Verbindung mit dem zweiten Wandabschnitt (57) des Zuführungskanals gegenüberliegt, und schwenkbar an dem anderen Ende mit dem Schlitten (80) gekoppelt ist.

13. Ballenpresse nach Anspruch 12,
dadurch **gekennzeichnet,** daß der Winkelhebel (72, 73) direkt schwenkbar mit dem genannten einen Ende mit dem ersten Wandabschnittes (56) des Zuführungskanals verbunden ist und an seinem anderen Ende schwenkbar mit dem Schlitten (80) über ein oder mehrere weitere Gestänge (71, 69/83) verbunden ist.

14. Ballenpresse nach einem der Ansprüche 7 bis 13,
dadurch **gekennzeichnet,** daß der erste Wandabschnitt (56) des inneren Wandteils (53) derart angeordnet ist, daß er die Neigung hat, unter der Wirkung seines eigenen Gewichtes zu fallen, um den Abstand gegenüber dem zugehörigen Abschnitt des äußeren Wandteils (56) so gering wie möglich zu machen, sofern er nicht auf andere Weise daran gehindert wird, sich von diesem Teil fort zu bewegen.

15. Ballenpresse nach Anspruch 14,
dadurch g e k e?n n z e i c h n e t , daß Gewichtskompensationseinrichtungen (82/104, 105) für den ersten Wandabschnitt (56) des inneren Wandteils (53) vorgesehen sind.

16. Ballenpresse nach einem der vorhergehenden Ansprüche,
dadurch g e k e n n z e i c h n e t , daß die Bewegung des inneren Wandteils (53) des Zuführungskanals (52) durch Messen der Belastung der Ballenpresse gesteuert ist.

17. Ballenpresse nach Anspruch 16,
dadurch **gekennzeichnet,** daß die Belastung der Ballenpresse durch die Feststellung einer Bewegung eines Windschutzes gemessen wird, der einen Teil der Ballenpresse bildet.

18. Ballenpresse nach Anspruch 16,
dadurch **gekennzeichnet,** daß die Belastung der Ballenpresse durch eine Feststellung des Drehmomentes in einen rotierenden Bauteil der Ballenpresse gemessen wird.

**FIG. 1**

**FIG.2**

**FIG.3**

FIG.4

**FIG.5**

EP 0 276 496 B1

**FIG.6**

EP 0 276 496 B1